# DEMANDE DE BREVET EUROPEEN

(11) **EP 0 562 986 A1**
(43) Date de publication de la demande: **29.09.1993**
(21) Numéro de dépôt: 93420137.7
(22) Date de dépôt: 26.03.1993
(51) Int. Cl.: H01M 4/02, H01M 2/12, H01M 10/04

(54) **Electrode bipolaire pour batterie d'accumulateurs**

(30) Priorité: 26.03.1992 FR 9203927
(71) Demandeur: SORAPEC S.A., F-94120 Fontenay-sous-Bois (FR)
(72) Inventeur: Bronoel, Guy, F-78000 Versailles (FR); Bugnet, Bernard, F-01630 Saint-Genis-Pouilly (FR); Tassin, Noelle, F-94120 Fontenay-sous-Bois (FR)
(74) Mandataire: Leszczynski, André

(57) **Abrégé**

L'électrode bipolaire comporte une cloison conductrice (5) percée, sur une partie (8) libre de matières actives, d'au moins un orifice (9) permettant la mise en communication par l'environnement gazeux des éléments assemblés en série. L'orifice (9) ne permettant pas le passage éventuel de l'électrolyte d'un élément dans l'autre, grâce à une surépaisseur en matériau avantageusement hydrophobe, elle-même percée, disposée de chaque côté autour de l'orifice (9).

Application aux batteries d'accumulateurs étanches.

## Description

La présente invention concerne des électrodes bipolaires pour batteries d'accumulateurs et vise plus particulièrement un de ses constituants, la cloison conductrice qui porte sur chacune de ses faces la matière active constituant les électrodes proprement dites, positive d'un côté et négative de l'autre.

La réalisation des batteries constituées d'électrodes bipolaires, qu'il s'agisse de couples Ni-Cd, Pb- PbO₂ ou autres pose plusieurs problèmes qui pour certains sont relatifs à la cloison bipolaire ou à sa mise en oeuvre. La cloison bipolaire est conductrice électroniquement, puisqu'elle porte les électrodes comme indiqué plus haut, mais assure aussi l'étanchéité entre deux éléments successifs.

Un premier problème est relatif aux différences de pression qui peuvent apparaître lors du fonctionnement entre des éléments différents, lorsque ceux-ci constituent une batterie dite étanche. Ces différences peuvent être dues entre autres à l'existence de gradients thermiques, inévitables entre des éléments proches des plaques d'extrémités fermant l'empilement d'une part, et ceux proches du coeur de l'empilement d'autre part. Ces différences peuvent également être dues à des capacités électriques différentes pour des électrodes situées dans des éléments différents. Par ailleurs, si une surpression excessive vient à se produire dans un élément, il convient que par sécurité cette pression ne puisse dépasser un seuil préalablement défini. On peut dans ce cas imaginer que chaque élément comporte une valve de sécurité. Toutefois, l'épaisseur d'un élément étant, dans le cas du Ni-Cd, par exemple comprise entre 2,5 et 3 mm, la réalisation d'une valve de très petite dimension est difficile, donc onéreuse.

Un deuxième problème a trait aux marges des cloisons bipolaires, là où est fixée la structure isolante séparant un élément d'un autre. En effet, un des moyens envisageables pour assurer l'étanchéité entre les éléments consiste à surmouler sur tout le périmètre de chaque cloison bipolaire une structure en polymère. Ce polymère devra être un isolant électrique et être stable dans les conditions d'emploi, c'est-à-dire dans la gamme de température et de sollicitations mécaniques à laquelle il peut être soumis et en présence de l'électrolyte utilisé. L'étanchéité entre deux éléments implique bien sûr que soit assurée une bonne adhérence entre le polymère et la cloison conductrice, mais aussi que la liaison entre les structures polymères de deux éléments voisins soit étanche, cette liaison pouvant être assurée par soudure, par exemple par fusion locale du polymère.

Il faut par ailleurs noter que la cloison conductrice est, pour des raisons évidentes d'allégement du générateur, généralement très mince, par exemple 0,05 mm ou 0,1 mm dans le cas du Ni-Cd. Un des incidents qui peut survenir, dommageable pour la batterie, résulte de ce que l'élévation de la pression interne dans un élément, associée à une élévation de température, peut provoquer par poussée sur le bord interne de la structure polymère son décollement par rapport à la cloison conductrice.

L'objet de la présente invention est d'apporter une solution à ces problèmes, la plus simple possible.

L'invention se rapporte donc à une électrode bipolaire comportant une cloison conductrice, dans laquelle la cloison est percée, sur une partie libre de matières actives, d'au moins un orifice permettant la mise en communication par l'environnement gazeux des éléments assemblés en série, cet orifice ne permettant pas le passage éventuel de l'électrolyte d'un élément dans l'autre.

Par "partie libre de matières actives", on entend désigner dans la suite de l'exposé, la partie de la cloison qui n'est pas recouverte par les électrodes et qui, évidemment, ne doit pas faire partie de la bordure ou des marges, c'est-à-dire de la zone qui sert à maintenir en place l'électrode bipolaire à l'intérieur de la batterie d'accumulateurs et qui va se trouver noyée dans la structure isolante. Typiquement, pour une batterie Ni-Cd ou Pb-PbO₂ par exemple, la partie libre en question a une largeur comprise entre 5 et 30 mm, valeur qui est notamment fonction de la capacité de l'élément et du régime de charge. Ces deux facteurs définissent en effet le volume "mort" qui doit exister dans chaque élément pour que les pressions internes n'atteignent pas une valeur excessive.

En d'autres termes, il est ménagé un ou plusieurs petits orifices dans la cloison conductrice de façon à égaliser les pressions. Sa dimension doit être telle que pour un débit maximum de gaz produit en fin de charge dans un élément, il n'en résulte pas une variation de pression entre cet élément et ses plus proches. De préférence, le nombre d'orifices est compris entre un et quatre.

Dans la mesure où tous les éléments communiquent entre eux, une surpression éventuelle dans un élément ne conduit normalement pas à une pression excessive dans l'ensemble de l'empilement. Néanmoins, si la pression dans l'ensemble des éléments venait à dépasser une pression limite de consigne, on prévoira avantageusement une ou plusieurs valves de sécurité qui s'ouvriront pour relâcher la pression. Ces valves ne seront plus situées nécessairement sur les éléments eux-mêmes, mais de préférence sur les plaques d'extrémités.

Il convient cependant d'éviter le risque de shunter par l'électrolyte les éléments consécutifs, au travers des orifices de mise en communication des éléments. Il faut remarquer que, selon le principe même lors du fonctionnement des éléments étanches, il n'y a normalement pas d'électrolyte libre dans les volumes des éléments non remplis par les électrodes et le séparateur situé entre les électrodes ; l'électrolyte est confiné par capillarité dans les pores des électrodes et du séparateur. Toutefois, il est toujours possible qu'un film de mouillage subsiste sur toutes les surfaces. Aussi afin d'éviter la présence de ce film d'électrolyte à l'orifice de communication, le ou les orifices de communication sont avantageusement réalisés de la façon suivante.

On perce dans la cloison conductrice un trou d'un diamètre de l'ordre de quelques mm, par exemple 2 à 5 mm. Dans ce trou est ensuite entré en force pour être serti un cylindre, d'un diamètre très légèrement supérieur, par exemple en matière plastique inerte comme le polytétrafluoroéthylène, ou tout autre polymère stable et de préférence hydrophobe, d'épaisseur supérieure à celle de la cloison. Ce cylindre aura été préalablement percé en son centre, ou il est alors percé une fois en place, en son centre, d'un trou de petit diamètre, 0,1 à 0,5 mm par exemple, dans lequel passe un fil, avantageusement un fil d'acier. Le cylindre est ensuite écrasé sur ses deux faces en préservant sa partie centrale, cet écrasement pouvant être réalisé à chaud. Le cylindre serti dans la cloison étant en place, on retire le fil par traction, ce qui libère un orifice de diamètre correspondant. Cet orifice assure par son trou central la mise en communication des atmosphères ou environnements gazeux de deux éléments ou compartiments successifs et, par les propriétés hydrophobes du matériau plastique utilisé, en particulier le polytétrafluoroéthylène, empêche la présence d'un film continu d'électrolyte entre les deux éléments.

En variante, on peut coller sur la cloison de part et d'autre du trou un disque par exemple de polytétrafluoroéthylène ou autre matériau avantageusement hydrophobe comme indiqué ci-dessus, comportant un trou central d'un diamètre égal ou légèrement supérieur à celui de l'orifice existant dans la cloison. Il faut naturellement que le polytétrafluoroéthylène adhère fortement à la cloison ; pour ce faire, on utilise une colle stable dans les conditions de fonctionnement de la batterie, telle qu'une résine époxy.

En variante encore, on peut obturer le trou central, réalisé par exemple comme précédemment, à l'aide d'une pastille poreuse ou semi-perméable, par exemple en polytétrafluoroéthylène microporeux, collée elle aussi.

Autrement dit, le ou les orifices de communication traversant la cloison sont donc constitués d'un trou et, disposée autour du trou, d'une surépaisseur percée de part en part, rapportée sur chaque côté de la cloison, ayant une forme quelconque, par exemple annulaire ou carrée. Le trou traversant la cloison d'une part et les deux trous traversant les deux surépaisseurs en prolongement d'autre part, peuvent avoir le même diamètre, ou bien de préférence le plus petit diamètre est celui du trou traversant la cloison proprement dite.

Avantageusement, la cloison comprend également d'autres perforations situées sur son pourtour, lesquelles vont servir d'autant de points d'ancrage pour la structure isolante qui maintiendra en place les cloisons successives.

Dans cette variante, la cloison conductrice présente des perforations sur les marges constituant la bordure, perforations qui se rempliront de polymère lors du moulage ou du surmoulage de la structure isolante et seront donc noyées dans celle-ci. De cette façon, on observe un meilleur accrochage de la structure isolante polymère sur la cloison et on évite tout risque de décollement.

Le diamètre et l'espacement des perforations est calculable en fonction de la pression pouvant exister dans l'élément, de l'épaisseur de la cloison et de l'adhérence du polymère sur le matériau constitutif de la cloison. A titre indicatif, ces perforations peuvent être situées à une distance comprise entre 2 et 6 mm de chaque bord de la cloison, espacées régulièrement de 10 à 60 mm. Leur diamètre est par exemple compris entre 2 et 4 mm.

L'invention sera mieux comprise en référence au dessin annexé, donné à titre d'exemple non limitatif. Dans ce dessin :
- la figure 1 est une vue schématique d'ensemble, en coupe, d'une batterie d'accumulateurs selon l'invention,
- la figure 2 représente, toujours en coupe et en détail, une forme de réalisation de l'orifice perçant la cloison conductrice de l'électrode bipolaire,
- la figure 3 correspond à la figure 2, dans une autre forme de réalisation,
- la figure 4 correspond à la figure 2, dans une autre forme de réalisation encore,
- la figure 5 représente, aussi en coupe, une perforation de la cloison conductrice, prise dans la structure isolante, et
- la figure 6 correspond à la figure 5 et représente, en plan, une cloison conductrice comprenant les perforations d'ancrage disposées sur le pourtour, avant réalisation des orifices de communication et garnissage par les matières actives constituant l'électrode positive ou négative.

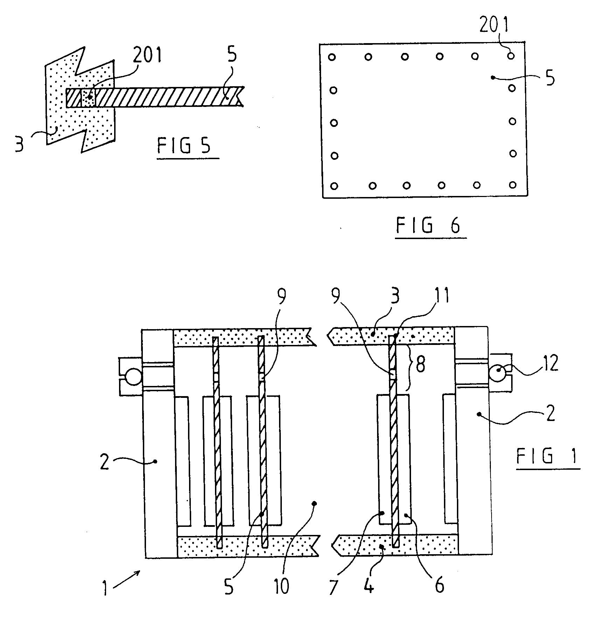

Comme on le voit sur la figure 1, la batterie d'accumulateurs 1 comprend des électrodes disposées parallèlement les unes aux autres, avec deux plaques d'extrémités 2 fermant la batterie de chaque côté. Une des plaques d'extrémités porte une électrode positive, tandis que l'autre porte une électrode négative. La batterie est fermée par une enveloppe polymère qui maintient aussi les électrodes en place, où on distingue une partie supérieure faisant office de couvercle 3 et une partie inférieure faisant office de fond 4.

Les autres électrodes, bipolaires, sont constituées d'une cloison conductrice 5 et, sur chaque face, d'une électrode positive 6 d'un côté et une électrode négative 7 de l'autre. L'électrode positive 6 contient par exemple des hydroxydes de nickel comme matières actives, et l'électrode négative de l'oxyde de cadmium comme matières actives par exemple.

En 8, on a représenté la partie de la cloison libre de matières actives, dans laquelle est schématiquement représenté un orifice 9 faisant communiquer l'environnement gazeux 10 des éléments ou compartiments consécutifs et, par récurrence, mettant en communication la totalité de l'intérieur de la batterie 1. Chaque cloison 5, qui fait office de collecteur des charges électriques, comprend aussi une partie 11 prise dans la structure en polymère 3, 4, servant à l'isolement et au maintien. En outre, on a tracé schématiquement un jeu de deux valves de sécurité 12, sur chaque plaque d'extrémité 2.

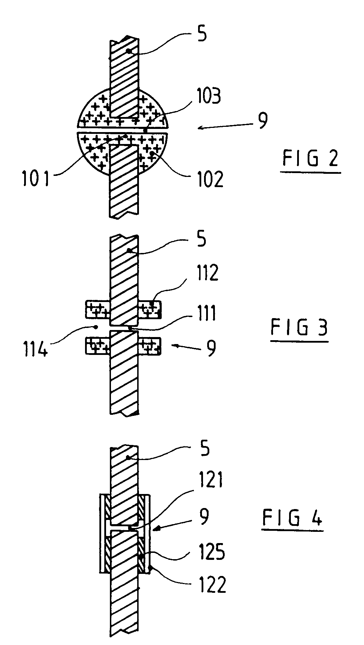

Dans la figure 2, l'orifice de communication 9 a été réalisé en perçant d'abord la cloison d'un trou 101 de sertissage pour une pièce de plastique hydrophobe 102 ayant un diamètre légèrement supérieur et initialement cylindrique. Cette pièce, si elle n'était pas déjà percée d'un trou central 103, d'un diamètre nettement plus petit, l'est une fois sertie, puis on l'écrase pour lui conférer par exemple la forme arrondie montrée sur la figure.

Sur la figure 3, l'orifice de communication est constitué du trou 111 percé dans la cloison 5 et des deux trous 114 dans le prolongement, ces derniers d'un diamètre supérieur et traversant chacun une rondelle 112 collée sur la cloison 5 de chaque côté.

Comme on le voit sur la figure 4, le trou 121 perçant la cloison 5 est obturé par deux membranes microporeuses 122 qui sont en l'occurrence collées sur deux rondelles 125 percées, analogues aux rondelles 112 de la figure 3 et qui sont elles-mêmes collées sur la cloison autour du trou 121.

Dans les figures 5 et 6, on a représenté une cloison avant garnissage par les matières actives faisant électrodes et avant percement des orifices de communication. Cette cloison comprend tout autour, en bordure, une série de perforations 201, qui vont venir se remplir de matières lors de la réalisation de la structure isolante, comme on le comprend aisément de la figure 5. Ainsi sera assuré un bon ancrage des cloisons conductrices dans la structure isolante.

L'invention peut être appliquée à tous les types d'accumulateurs, mais on aura vite saisi qu'elle trouve un intérêt tout particulier dans la construction d'accumulateurs étanches, où les problèmes de pression interne peuvent vite devenir cruciaux.

## Revendications

1. Electrode bipolaire pour batterie d'accumulateurs comportant une cloison conductrice (5), dans laquelle la cloison (5) est percée, sur une partie (8) libre de matières actives, d'au moins un orifice (9) permettant la mise en communication par l'environnement gazeux des éléments assemblés en série, cet orifice (9) ne permettant pas le passage éventuel de l'électrolyte d'un élément dans l'autre.

2. Electrode bipolaire selon la revendication 1, caractérisée en ce que les orifices (9) sont au nombre de un à quatre.

3. Electrode bipolaire selon la revendication 1 ou 2, caractérisée en ce que le diamètre des orifices (9) est compris entre 0,1 et 0,5 mm.

4. Electrode bipolaire selon la revendication 1 ou 2, caractérisée en ce que le ou les orifices (9) de communication traversant la cloison (5) sont constitués d'un trou (103) et, disposée autour du trou, d'une surépaisseur (102) percée de part en part, rapportée sur chaque côté de la cloison (5).

5. Electrode bipolaire selon la revendication 4, caractérisée en ce que le trou traversant la cloison (5) d'une part et les deux trous traversant les deux surépaisseurs (102) en prolongement d'autre part, ont le même diamètre.

6. Electrode bipolaire selon la revendication 4, caractérisée en ce que le trou (111) traversant la cloison (5) est d'un diamètre plus petit que les deux trous (114) traversant en prolongement les surépaisseurs (112).

7. Electrode bipolaire selon la revendication 1 ou 2, caractérisée en ce que la cloison (5) comprend sur son pourtour des perforations (201) qui sont noyées dans la structure isolante (3,4) maintenant en place les cloisons (5) successives.

8. Procédé de fabrication d'une électrode bipolaire selon l'une des revendications 1 à 7, caractérisé en ce qu'on perce dans la cloison conductrice (5) au moins un trou (101) dans lequel on sertit un cylindre (102) en matériau avantageusement hydrophobe, puis qu'on perce le centre du cylindre d'un trou (103) dans lequel on passe un fil, qu'on écrase le cylindre (102) serti sur ses deux faces en préservant sa partie centrale et qu'enfin on retire le fil.

9. Procédé de fabrication d'une électrode bipolaire selon la revendication 1, caractérisé en ce qu'on perce au moins un trou (111) dans la cloison conductrice (5), qu'on colle sur la cloison (5) de part et d'autre du trou (111) un disque (112) comportant un trou central (114) d'un diamètre égal ou légèrement supérieur à celui du trou (111) traversant la cloison.

10. Procédé de fabrication d'une électrode bipolaire selon la revendication 9, caractérisé en ce qu'on obture le trou en y collant de part et d'autre une pastille poreuse ou semi-perméable.

11. Batterie d'accumulateurs, caractérisée en ce qu'elle comprend des électrodes bipolaires selon l'une des revendications 1 à 7 et une ou plusieurs valves de sécurité (12), ces valves étant placées sur les plaques d'extrémités (2) qui ferment la batterie.
